# EUROPÄISCHE PATENTSCHRIFT

(11) **EP 3 499 091 B1**
(45) Veröffentlichungstag und Bekanntmachung des Hinweises auf die Patenterteilung: **11.12.2024**
(21) Anmeldenummer: 18203252.4
(22) Anmeldetag: 30.10.2018
(51) Int. Cl.: F16H 57/03, F16H 57/04, F16H 57/02

(54) **GETREIBEANORDNUNG FÜR EINE LANDWIRTSCHAFTLICHE ARBEITSMASCHINE**
GEARBOX FOR AN AGRICULTURAL MACHINE
BOÎTE DE VITESSES POUR UN MACHINISME AGRICOLE

(30) Priorität: 18.12.2017 DE 102017130270
(43) Veröffentlichungstag der Anmeldung: 19.06.2019
(73) Patentinhaber: CLAAS Industrietechnik GmbH, 33106 Paderborn (DE)
(72) Erfinder: Knoop, Patrick, 33154 Salzkotten (DE); Schulte, Michael, 33129 Delbrück (DE)
(74) Vertreter: CLAAS Gruppe

(56) Entgegenhaltungen:
- DE-T5- 112013 007 520
- JP-U- S57 167 948
- KR-A- 20040 033 980
- US-A- 1 220 810
- US-A- 5 341 901

## Beschreibung

Die vorliegende Erfindung betrifft eine Getriebeanordnung für eine landwirtschaftliche Arbeitsmaschine, insbesondere einen Traktor, Mähdrescher oder Feldhäcksler, gemäß dem Anspruch 1. Ferner betrifft die vorliegende Erfindung die Verwendung einer solchen Getriebeanordnung als Pumpenverteilergetriebe gemäß dem Anspruch 11.

Landwirtschaftliche Arbeitsmaschinen, wie Traktoren oder selbstfahrende Erntemaschinen, beispielsweise Mähdrescher oder Feldhäcksler, sind aus dem Stand der Technik bekannt. Diese weisen üblicherweise mehrere Arbeitsorgane und/oder Anbaugeräte zur Durchführung oder Unterstützung landwirtschaftlicher Arbeit auf. Verschiedene der Arbeitsorgane und/oder Anbaugeräte werden hydraulisch betätigt bzw. betrieben. Hydraulisch betätigbare Arbeitsorgane können beispielsweise die Lenkeinrichtung der landwirtschaftlichen Arbeitsmaschine oder eine Hubeinrichtung wie ein Heckkraftheber für ein Anbaugerät sein. Die hydraulisch betätigbaren Verbraucher werden über mindestens eine, üblicherweise je eine, Fluidpumpe mit der notwendigen hydraulischen Energie versorgt, welche jeweils von einem Nebenabtrieb angetrieben werden. Ein Nebenabtrieb ist dabei Teil eines Antriebsstranges der Arbeitsmaschine, die von einem Hauptgetriebe abgezweigt sind oder eigeneständige Antriebe darstellen. Landwirtschaftliche Arbeitsmaschinen weisen dabei üblicherweise eine Reihe von Nebenabtrieben auf, um die hydraulisch betätigbaren Arbeitsorgane hinreichend mit hydraulischem Druck druckbeaufschlagten Fluid versorgen zu können.

Die hierfür benötigten Fluidpumpen werden üblicherweise über eine Getriebeanordnung wie ein Pumpenverteilergetriebe als Leistungsverzweiger gemeinsam angetrieben. Die Getriebeanordnung weist dabei kämmende Zahnrädern als Übertragungselemente auf, welche beispielsweise mit einer Antriebswelle und/oder jeweils einer Abtriebswelle als Nebenabtrieb verbunden sind. Eine Schmierung der Getriebeanordnung erfolgt dabei mittels eines Fluids wie beispielsweise Öl, welches innerhalb der Getriebeanordnung zirkuliert. Die Zahnräder sind dabei zumindest teilweise in Öl eingetaucht, wodurch Planschverluste entstehen und eine Erwärmung des Öls und damit der Getriebeanordnung erfolgt. Um übermäßige Planschverluste zu vermeiden, ist beispielsweise aus der DE 103 59 109 A1 bekannt, bei einer Getriebeanordnung zwischen benachbarten Getriebeabschnitten ein Trennmittel vorzusehen, mit welchem die zwei Getriebeabschnitte voneinander abtrennbar sind, wodurch Schmiermittel in dem Getriebeabschnitt zurückhaltbar ist, der momentan nicht oder mit geringerer Drehzahl betrieben wird. Nachteilig ist hierbei, dass innerhalb eines Getriebeabschnittes, besonders bei einem schwankenden Ölstand, weiterhin schwankende Planschverluste auftreten
und damit eine unerwünschte Erwärmung auftritt, die bei beispielsweise bei höheren Leistungsanforderungen zu einem Überschreiten der zulässigen Temperaturgrenzen der Getriebeelement führen kann.

Die DE 11 2013 007 520 T5 beschreibt eine Getriebeanordnung gemäß dem Oberbegriff des Anspruches 1.

Der Erfindung liegt daher die Aufgabe zugrunde, eine Getriebeanordnung für eine landwirtschaftliche Arbeitsmaschine bereitzustellen, welche einen zuverlässigen, effizienten Betrieb der Getriebeanordnung ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Erfindungsgemäß ist demnach eine Getriebeanordnung für eine landwirtschaftliche Arbeitsmaschine, insbesondere Traktor, Mähdrescher oder Feldhäcksler, mit einem Antriebszahnrad und mindestens einem ersten Abtriebszahnrad vorgesehen, welche jeweils um eine Drehachse drehbar gelagert und zum drehfesten Verbinden mit einer Antriebswelle oder Abtriebswelle als Nebenabtrieb der landwirtschaftlichen Arbeitsmaschine ausgestaltet sind. Die Getriebeanordnung weist ein mit dem Antriebszahnrad und dem mindestens einen Abtriebszahnrad in kämmendem Eingriff stehendes Zwischenzahnrad auf, wobei die Getriebeanordnung ein Getriebegehäuse aufweist, wobei die Zahnräder in einem durch das Getriebegehäuse gebildeten Innenraum angeordnet sind, welches innenseitig eine Innenstruktur zur Vergrößerung der Oberfläche des Getriebegehäuses und zur Verbesserung der Wärmeabfuhr des Getriebegehäuses aufweist und im Betrieb zumindest teilweise mit einem Fluid gefüllt ist. Die Getriebeanordnung ist dadurch gekennzeichnet, dass das Getriebegehäuse innenseitig eine bodenseitig, also unterhalb, des Zwischenzahnrads angeordnete Aussparung aufweist, welche gegenüber dem Innenraum zumindest in einem unteren Bereich des Innenraums durch ein Trennmittel abgetrennt ist, wodurch ein bodenseitiges Fluidreservoir zumindest unterhalb des Zwischenzahnrades ausgebildet ist, wobei das Trennmittel des bodenseitigen Fluidreservoirs eine fluiddurchlässige Öffnung aufweist, über die im Betrieb das Fluid in den unteren Bereich des Innenraums gelangt, wobei der Kopfkreis des Zwischenzahnrades bodenseitig tiefer angeordnet ist als die Kopfkreise der anderen Zahnräder, derart, dass das Zwischenzahnrad im Betrieb in das Fluid im unteren Bereich des Innenraums eintaucht.

Der Innenraum des Getriebegehäuses weist dabei nur einen Abschnitt auf, in dem die Zahnräder angeordnet sind. Innenseitig weist das Getriebegehäuse die Innenstruktur auf und die mindestens eine Aussparung, welche durch das, insbesondere genau, eine Trennmittel zur Bildung eines Fluidreservoirs zumindest teilweise abgedeckt ist. Die Aussparung kann dabei durch die Innenstruktur des Getriebegehäuses ausgebildet sein. Durch ein, insbesondere innenseitig, einer einem Zahnrad zugeordneten Seite, an der Aussparung angeordnetes Trennmittel bildet zusammen mit der Aussparung ein Fluidreservoir aus. In dem Fluidreservoir kann nicht unmittelbar als Schmiermittel für die Getriebeanordnung genutztes Fluid aufgenommen werden. Durch die seitliche Anordnung des Fluidreservoirs, benachbart zu einem Zahnrad, und beispielsweise mit einem Trennmittel im Wesentlichen senkrecht zur Drehachse des Zahnrades angeordnet, kann eine Abschirmung und/oder Kapselung eines oder mehrerer Zahnräder gegen einen unerwünscht hohen Fluidpegel erfolgen, wodurch Planschverluste und eine Erwärmung reduziert werden können. Die seitliche Anordnung mindestens eines Fluidreservoirs ist besonders vorteilhaft bei Schräglagen, da hierdurch an den Abtrieben und/oder Fluidpumpen anstehendes Fluid vermeiden werden kann, welches zu einem unerwünschten Fluidverlust führen könnte. Zudem haben ein oder mehrere Fluidreservoirs den Vorteil, dass bei schwankendem Ölstand, insbesondere einer Erhöhung des Ölstandes, eine stabile und im Wesentlichen kontante Fluidversorgung innerhalb der Getriebeanordnung gewährleistet werden kann, wodurch auch ein stabiler Temperaturhaushalt ermöglicht werden kann. Durch die Innenstruktur und die Ausbildung eines oder mehrerer Fluidreservoirs kann auch die zur Kühlung des Fluides nutzbare Fläche der Getriebeanordnung vergrößert und so die Kühlung des Fluides und der Getriebeanordnung verbessert werden. Dies ermöglicht, insbesondere bei Schräglagen, eine zuverlässige und effiziente Beölung der Getriebeanordnung.

Durch die Anordnung des Zwischenzahnrades sammelt sich das Fluid bei einer normalen Ausrichtung der Getriebeanordnung unterhalb des Zwischenrades bzw. strömt unter Einfluss der Schwerkraft dorthin, so dass im Betrieb zumindest das Zwischenzahnrad in einem unteren Bereich in das Fluid eintaucht und das Fluid durch seine Rotation in dem Innenraum des Getriebegehäuses zur Schmierung und/oder Kühlung der anderen Zahnräder verteilt.

Die bodenseitig des Zwischenzahnrades angeordnete Aussparung kann durch ein einstückig mit dem Getriebegehäuse ausgebildetes Trennmittel beispielsweise vollständig abgeschlossen sein. Hierbei kann eine fluiddurchlässige Öffnung in Form einer Bohrung in dem Trennmittel in einem unteren Bereich benachbart zu dem Zwischenzahnrad ausgebildet sein, wodurch ein durch die Öffnung zum Zwischenzahnrad hin austretendes Fluid unmittelbar von diesem erfasst werden kann. Durch das Zwischenzahnrad erfolgt beispielsweise eine Beölung der Getriebeanordnung. Durch das Fluidreservoir unterhalb des Zwischenzahnrades kann ein beruhigter Bereich des Fluides geschaffen werden, in dem Verunreinigungen absinken können.

In einer bevorzugten Ausgestaltung der Erfindung weist die Getriebeanordnung ein zweites Abtriebszahnrad auf, wobei das Antriebszahnrad dem Antrieb des ersten Abtriebszahnrades und des zweiten Abtriebszahnrades dient, welches um eine Drehachsen drehbar in dem Getriebegehäuse drehbar gelagert ist, wobei das erste Abtriebszahnrad neben dem Zwischenrad auch mit dem zweiten Abtriebszahnrad in kämmendem Eingriff steht, wodurch eine Drehbewegung des ersten Abtriebszahnrades ebenfalls auf das zweite Abtriebszahnrad übertragen wird.

In einer weiter bevorzugten Ausgestaltung der Erfindung ist das Trennmittel in Form eines Bleches und/oder einstückig mit dem Getriebegehäuse ausgebildet.
Das Trennmittel in Form eines Bleches kann dabei aus einem Metall und/oder Kunststoff sein. Ein Trennmittel in Form eines Bleches kann lösbar an dem Getriebegehäuse zur zumindest teilweisen Abdeckung einer Aussparung angeordnet sein. Ein Trennmittel aus Blech bietet den Vorteil, dass es kostengünstig und mit einfachen Mitteln an die räumlichen Gegebenheiten der Getriebeanordnung angepasst werden kann. So kann das Trennmittel für eine seitliche Aussparung beispielsweise in Form eines Kreissegmentes ausgebildet sein, welches an einer entsprechend ausgebildeten Aussparung angeordnet sein kann, die um eine Drehachse eines Zahnrades herum seitlich zu diesem ausgebildet sein kann. Ein einstückig mit dem Getriebegehäuse ausgebildetes Trennmittel kann zusammen mit diesem gefertigt sein, beispielsweise bei einem Getriebegehäuse aus einer Gusslegierung. Dies hat den Vorteil, dass das das Trennmittel montagefrei zusammen mit dem Getriebegehäuse hergestellt werden kann.

In einer bevorzugten Ausgestaltung der Erfindung weist das Getriebegehäuse innenseitig mindestens ein seitlich neben einem Zahnrad angeordnetes seitliches Fluidreservoir auf, wobei das bodenseitige Fluidreservoir mit dem Fluidreservoir fluiddurchlässig verbunden ist. Seitlich von Zahnrädern angeordnete Fluidreservoire sind dabei zumindest teilweise oberhalb des bodenseitigen Fluidreservoirs angeordnet, so dass das Fluid in Richtung des bodenseitigen Fluidreservoirs strömt. Die seitlich angeordneten Fluidreservoirs können dabei als Fluidablauf nur diese Verbindung zu dem bodenseitigen Fluidreservoir aufweisen. Dies bewirkt, dass zumindest ein Teil des Fluides aus dem Innenraum über einen definierten Weg über das bodenseitige Fluidreservoir und dessen zahnradseitige Öffnung dem Zahnrad, insbesondere dem Zwischenzahnrad, zur erneuten Verteilung im Innenraum zugeführt werden kann. Dies hat besonders bei Schräglagen den Vorteil einer zuverlässigen Fluidverteilung im Innenraum.

In einer bevorzugten Ausgestaltung der Erfindung ist zwischen dem Zwischenzahnrad und dem Trennmittel des bodenseitigen Fluidreservoirs ein Freigang mit einer Höhe ausgebildet, wobei das Trennmittel des bodenseitigen Fluidreservoirs dem Umfang des Zwischenzahnrades zumindest teilweise mit einer konstanten Höhe folgt, wodurch der Freigang als Freigang mit zumindest teilweise konstantem Querschnitt ausgebildet ist. Der Freigang ist dabei der Abstand zwischen einem Kopfkreis des Zwischenzahnrades und einem Boden des Getriebegehäuses, welcher in radialer Richtung benachbart zu dem Zwischenzahnrad angeordnet ist. Hierdurch folgt der Boden zumindest entlang eines Teils des Umfangs des Zwischenzahnrades dessen Kontur, wodurch die Förderung des Fluides durch das rotierende Zwischenzahnrad verbessert werden kann. Zudem kann der Freigang relativ schmal ausgebildet sein, wobei beispielsweise der Freigang kleiner gleich der Zahnbreite des Zwischenzahnrades sein kann.

In einer weiteren vorteilhaften Ausgestaltung der Erfindung ist die Innenstruktur zumindest im Bereich der Drehachse eines Zahnrades ringförmig ausgebildet, und die ringförmige Struktur, insbesondere an einer Oberseite, weist mindestens eine fluiddurchlässige Öffnung zur Fluidzufuhr zu der Drehachse hin auf. Die Innenstruktur des Getriebegehäuses kann rippenförmig und/oder ringförmig ausgebildet sein. Eine ringförmige Innenstruktur kann um eine Drehachse herum ausgebildet sein und als Lagersitz zur Aufnahme einer Lagerung eines Zahnrades ausgestaltet sein. Durch die fluiddurchlässige Öffnung an der Oberseite der ringförmigen Innenstruktur bzw. des Lagersitzes kann Fluid aus dem Innenraum zu einem Zahnrad, insbesondere innenseitig des Zahnrades zu einer Welle hin, geleitet werden.

Vorteilhaft ist weiterhin, dass die Innenstruktur, insbesondere im Bereich oberhalb der mindestens einen fluiddurchlässigen Öffnung der ringförmigen Struktur, trichterförmig ausgebildet ist. Die fluiddurchlässige Öffnung ist dabei in der ringförmigen Innenstruktur bzw. dem Lagersitz ausgebildet. Die trichterförmige Innenstruktur kann durch Rippen gebildet werden, wodurch die der Öffnung zuführbare Menge an Fluid vergrößert werden kann. Dies hat den Vorteil einer verbesserten Schmierung des Zahnrades und der damit drehfest verbundenen Welle, beispielsweise Abtriebswelle.

In einer weiteren vorteilhaften Ausgestaltung der Erfindung weist die Innenstruktur mindestens ein Leitelement auf, welches ein Fluid im Wesentlichen von einer Innenseite des Getriebegehäuses wegleitet. Das Leitelement kann lösbar innenseitig mit dem Getriebegehäuse verbunden und beispielsweise aus einem Metall und/oder einem Kunststoff ausgebildet sein. Denkbar ist auch eine einstückige Ausgestaltung des Leitelements mit dem Getriebegehäuse. Das Leitelement ist im Wesentlichen ein bogenförmig ausgebildetes U-Profil und leitet Fluid von der Innenseite des Getriebegehäuses weg und beispielsweise zu einer Drehachse eines Zahnrades hin und in dieses hinein, so dass das Fluid zur Schmierung des Zahnrades bzw. einer drehfest mit diesem verbundenen Welle und damit der Abtriebe dienen kann.

In einer bevorzugten Ausgestaltung der Erfindung weist mindestens ein Zahnrad innenseitig eine ringförmige Kappe zum Zurückhalten des Fluides auf. Die Kappe ist dabei innenseitig des Zahnrades, um dessen Drehachse herum ausgebildet. Die Kappe bildet dabei getriebegehäuseseitig einen nach radial innen zur Drehachse gerichteten, umlaufenden Rand. Die Kappe kann durch den Rand zumindest einen Teil des, insbesondere mittels des Leitelementes in das Zahnrad geleiteten, Fluides in dem Zahnrad zur Sicherstellung einer Mindestschmierung zurückhalten. Ein Leitelement kann dabei über die Kappe und insbesondere der Rand der Kappe in das Innere des Zahnrades hineinzureichen, um eine zuverlässige Leitung des Fluides in das Zahnrad zu gewährleisten.

Zudem betrifft die Erfindung eine landwirtschaftliche Arbeitsmaschine, insbesondere ein Traktor oder eine selbstfahrende Erntemaschine, mit mindestens einer wie vorstehend beschriebenen und ausgebildeten mit Getriebeanordnung.

Weiterhin betrifft die Erfindung eine Verwendung der vorstehend beschriebenen und ausgebildeten Getriebeanordnung als Pumpenverteilergetriebe. Das Verteilergetriebe kann dabei so konfiguriert sein, dass es mindestens zwei Nebenabtriebe, beispielsweise Fluidpumpen, gleichzeitig antreiben kann, wobei ein Antrieb über die Antriebswelle erfolgt.

Nachfolgend wird die Erfindung unter Bezugnahme auf die anliegenden Zeichnungen näher erläutert

Es zeigen:
- Fig. 1: eine Getriebeanordnung für eine landwirtschaftliche Arbeitsmaschine gemäß der Erfindung in einer perspektivischen Darstellung mit einem geöffneten Getriebegehäuse;
- Fig. 2: eine detaillierte Schnittansicht der Getriebeanordnung aus Fig. 1 entlang der Linie A-A;
- Fig. 3: eine detaillierte perspektivische Ansicht eines unterhalb eines Zahnrades angeordneten Fluidreservoirs;
- Fig. 4: eine Schnittansicht (B-B) des Fluidreservoirs aus Fig. 3;
- Fig. 5: eine detaillierte perspektivische Ansicht der Innenstruktur des Getriebegehäuses mit einem Leitelement; und
- Fig. 6: eine Schnittansicht der Getriebeanordnung aus Fig. 5 entlang der Linie C-C.

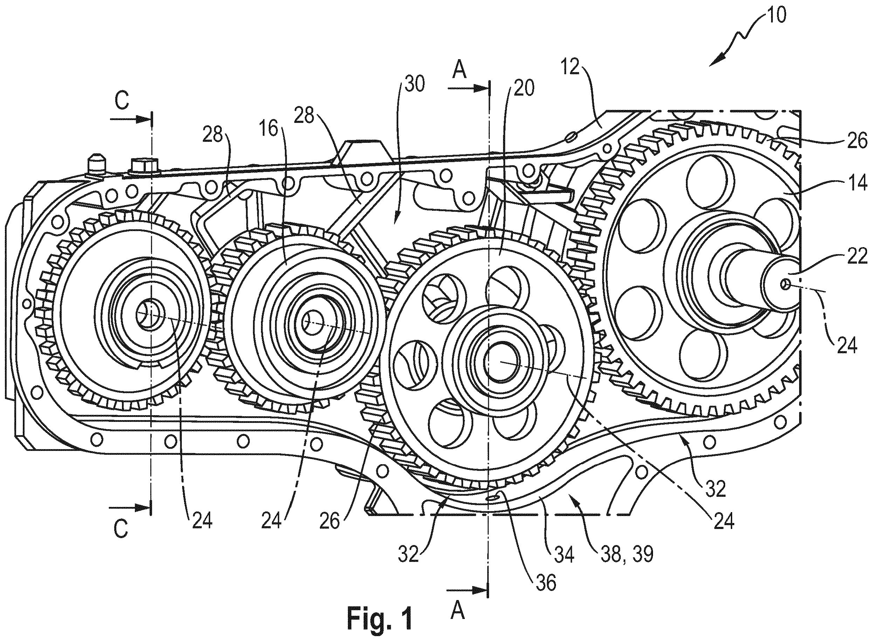

In Figur 1 ist eine Getriebeanordnung 10 für eine landwirtschaftliche Arbeitsmaschine wie einen Traktor oder eine selbstfahrende Erntemaschine dargestellt. Auf den Aufbau eines Traktors oder einer selbstfahrenden Erntemaschine soll nicht detailliert eingegangen werden, da dieser als dem Fachmann bekannt angesehen wird. Die Getriebeanordnung 10 weist ein Getriebegehäuse 12 auf, in dem ein um eine Drehachse 24 drehbar gelagertes Antriebszahnrad 14 angeordnet ist, welches über eine Antriebswelle 22 beispielsweise durch einen Antriebsstrang (nicht dargestellt) mit einem Antriebsmotor antreibbar ist. Das Antriebszahnrad 14 dient dem Antrieb eines ersten Abtriebszahnrades 16 und eines zweiten Abtriebszahnrades 18, welche ebenfalls um Drehachsen 24 drehbar in dem Getriebegehäuse 12 drehbar gelagert sind. Die Abtriebszahnräder 16, 18 können jeweils mit einer Abtriebswelle (nicht gezeigt) verbunden werden, wodurch Nebenabtriebe zum Antrieb beispielsweise von hydraulischen Fluidpumpen bereitgestellt werden können, über die hydraulisch betätigbare Arbeitsaggregate der landwirtschaftlichen Arbeitsmaschine antreibbar sind.

Der Antrieb des ersten und zweiten Abtriebszahnrades 16, 18 erfolgt mittels eines Zwischenzahnrades 20. Das Zwischenzahnrad 20 steht dabei über radial außen angeordnete Zähne 26 mit den entsprechenden Zähnen 26 des Antriebszahnrades 14 in kämmendem Eingriff. In der dargestellten Ausführungsform steht das Zwischenzahnrad 20 ebenfalls mit dem ersten Abtriebszahnrad 16 in kämmendem Eingriff, so dass eine Drehbewegung des Antriebszahnrades 14 über das Zwischenzahnrad 20 auf das erste Abtriebszahnrad 16 übertragen wird. Das erste Abtriebszahnrad 16 steht neben dem Zwischenrad 20 auch mit dem zweiten Abtriebszahnrad 18 in kämmendem Eingriff, wodurch eine Drehbewegung des ersten Abtriebszahnrades 16 ebenfalls auf das zweite Abtriebszahnrad 18 übertragen wird. Ein Antrieb des zweiten Abtriebszahnrades 18 erfolgt somit von dem Antriebszahnrad 14 über das Zwischenzahnrad 20 und das erste Abtriebszahnrad 16. Die Zahnräder 14, 16, 18, 20, welche unterschiedliche Durchmesser aufweisen, sind dabei im Wesentlichen in einer waagerechten Reihe benachbart zueinander in dem Gehäuse und insbesondere in einer Ebene angeordnet. Zur Schmierung und Kühlung der Getriebeanordnung 10 ist innerhalb des durch das Getriebegehäuse 12 gebildeten Innenraums 30 ein Fluid 46 angeordnet, welches durch die Rotation der Zahnräder 14, 16, 18, 20 im Innenraum verteilt wird, wobei ein übermäßiges Eintauchen der Zahnräder 14, 16, 18, 20 zu erhöhten Planschverlusten und einer unerwünschten Erwärmung der Getriebeanordnung führen kann.

Bei der erfindungsgemäßen Getriebeanordnung 10 erfolgt eine Verteilung des Fluides innerhalb des Innenraumes 30 der Getriebeanordnung 10 über das Zwischenzahnrad 20, welches niedriger angeordnet ist als das Antriebszahnrad 14 und die Abtriebszahnräder 16, 18. Hierbei ist der Kopfkreis des Zwischenzahnrades 20 bodenseitig tiefer angeordnet als die Kopfkreise der anderen Zahnräder 14, 16, 18, so dass eine Verteilung des Fluides 46 in dem Innenraum 30, die sogenannte Beölung, im Wesentlichen durch das Zwischenzahnrad 20 erfolgt. Das in dem Innenraum 30 verteilte Fluid 46 kann zumindest teilweise über die Innenflächen des Getriebegehäuses 12 bodenseitig zurückgeführt werden. Durch eine innenseitig des Getriebegehäuses 12 ausgebildete Innenstruktur 28 kann dessen Oberfläche vergrößert und eine Wärmeabfuhr verbessert werden. Zur Aufnahme des insbesondere zurückgeführten Fluides 46 weist das Getriebegehäuse 12 bodenseitig eine Aussparung 38 auf, welche gegenüber dem Innenraum 30 zumindest in einem unteren Bereich 32 durch ein Trennmittel 34 abgetrennt ist, wodurch ein bodenseitiges Fluidreservoir 39 ausgebildet wird. Das bodenseitige Fluidreservoir 39 ist im Wesentlichen unterhalb des Zwischenzahnrades 20 angeordnet.

Zwischen dem Zwischenzahnrad 20 und dem Trennmittel 34 des bodenseitigen Fluidreservoirs 39 ist dabei ein geringer unterer Freigang mit einer Höhe h ausgebildet, wodurch eine Förderung und Verteilung des Fluides 46 in dem Innenraum verbessert werden kann. Die Höhe h des Freigangs ist dabei im Wesentlichen kleiner oder gleich der Zahnbreite b des Zwischenzahnrades 20. Der untere Bereich 32 ist dabei derart ausgestaltet, dass das Trennmittel 34 des bodenseitigen Fluidreservoirs 39 dem Umfang des Zwischenzahnrades 20 zumindest teilweise mit einem konstanten Abstand und/oder Höhe h folgt, wodurch ein Freigang mit zumindest teilweise konstantem Querschnitt ausgebildet wird, wodurch die Förderung des Fluides verbessert werden kann.

Ein Fluid 46, welches sich in dem bodenseitigen Fluidreservoir 39 befindet, kann über eine Öffnung 36 in dem Trennmittel 34 des bodenseitigen Fluidreservoirs 39 in Richtung des Zwischenzahnrades 20 in den unteren Bereich 32 gelangen, um beispielsweise von dort wieder im Innenraum 30 des Getriebegehäuses 12 verteilt zu werden. Das bodenseitige Fluidreservoir 39 bietet den Vorteil, dass das dort befindliche Fluid beruhigt werden kann und Fremdstoffe und Verschmutzungen sich dort ablagern können und nicht wieder in dem Innenraum 30 verteilt werden. Zudem kann durch das bodenseitige Fluidreservoir 39 die in der Getriebeanordnung 10 verfügbare Menge an Fluid erhöht werden, ohne dass es hierbei, beispielsweise durch Planschverluste, zu einer Erhöhung der Temperatur der Getriebeanordnung kommt. Dies hat den Vorteil, dass die Gebrauchsdauer des Fluides, beispielsweise Öl, erhöht werden und die notwendigen Wartungsintervalle verlängert werden können.

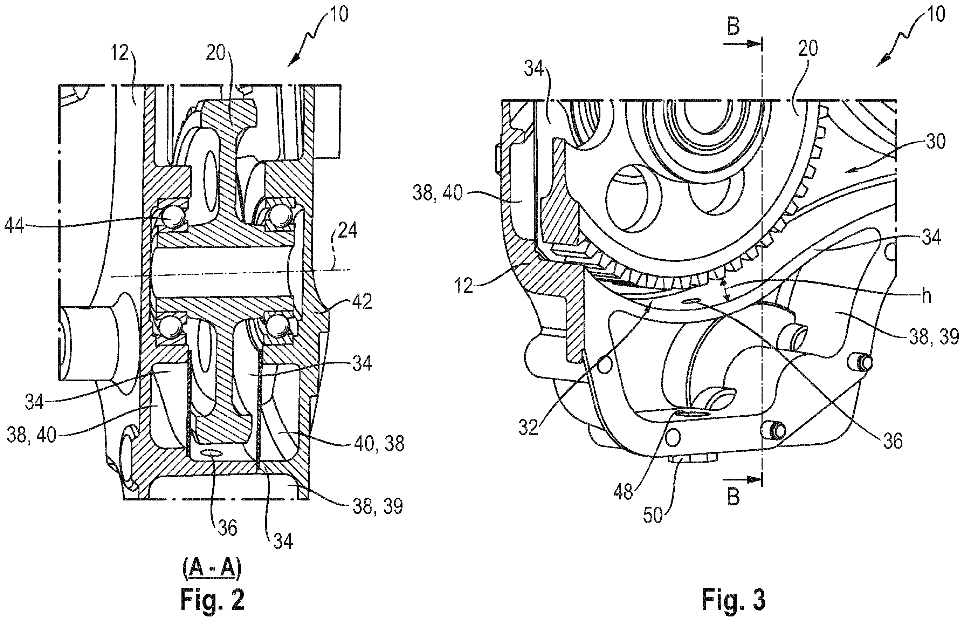

In Figur 2 ist eine Schnittansicht des Getriebegehäuses 12 entlang der Schnittlinie A-A dargestellt. Der Schnitt verläuft dabei durch das um die Drehachse 24 drehbare Zwischenzahnrad 20, welches mittels Lagern 44 gegenüber dem Getriebegehäuse 12 abgestützt ist. Bodenseitig, also unterhalb, des Zwischenzahnrades 20 ist das bodenseitige Fluidreservoir 39 ausgebildet, welches durch das Trennmittel 34 von dem Zwischenzahnrad 20 abgegrenzt ist, wobei Fluid 46 über die Öffnung 36 in einen unteren Bereich 32 des Innenraumes austreten kann. Das Trennmittel 34 des bodenseitigen Fluidreservoirs 39 kann lösbar an dem Getriebegehäuse 12 angeordnet sein, oder einstückig mit diesem ausgebildet sein. Das Trennmittel 34, insbesondere des bodenseitigen Fluidreservoirs 39, kann dabei einteilig oder mehrteilig ausgebildet sein, und beispielsweise aus einem Metall und/oder einem Kunststoff ausgeführt sein.

In dem unteren Bereich 32 sind zu beiden Seiten des Zwischenzahnrades 20 Aussparungen 38 angeordnet, welche durch Trennmittel 34 in Form von Blechen gegenüber dem Zwischenzahnrad 20 abgedeckt sind, wodurch seitliche Fluidreservoire 40 gebildet werden. Die blechförmigen Trennmittel 34 und/oder die seitlichen Aussparungen 38 sind dabei halbkreisförmig oder bogenförmig ausgebildet. Die seitlichen Aussparungen 38 und/oder seitlichen Fluidreservoire 40 können dabei um die Drehachse 24 des Zwischenzahnrades 20 herum ausgebildet sein, und Fluid 46 aufnehmen, welches über die Innenflächen des Innenraumes 30 in Richtung Boden zurückströmt.

Durch die seitlichen Fluidreservoire 40 kann zurückströmendes Fluid 46 zunächst aufgenommen und in dem unteren Bereich 32 von dem Zwischenzahnrad 20 ferngehalten werden, wodurch ein übermäßiges Eintauchen des Zwischenzahnrads 20 in das Fluid vermieden und Planschverluste reduziert werden können. Zudem kann durch die bogenförmige und/oder halbkreisförmige Ausgestaltung der seitlichen Aussparungen 38 und/oder Trennmittel 34 und/oder seitlichen Fluidreservoirs 40 auch bei Schräglagen des Getriebegehäuses 12 Fluid zuverlässig zurückgehalten werden. Zudem bieten die seitlichen Trennmittel 34 den Vorteil, dass in Schräglagen kein Fluid, bzw. Öl, an den Abtriebszahnrädern 16, 18 und beispielsweise den damit verbundenen hydraulischen Fluidpumpen anstehen kann. Ein Fluidverlust durch sogenannte saugende Pumpen kann dadurch vermieden werden.

Das Fluid, welches im Betrieb von den Zahnrädern 14, 16, 18, 20 durch das Gehäuse geschleudert wird, kann an den Innenwänden des Getriebegehäuses 12 herunterlaufen und sich hinter den Trennmitteln 34 in den seitlichen Fluidreservoirs 40 sammeln. Das bodenseitige Fluidreservoir 39 kann, insbesondere zulaufseitig, nur mit mindestens einer der seitlichen Fluidreservoirs 40 fluiddurchlässig verbunden sein, um das gesammelte Fluid aus den seitlichen Fluidreservoirs 40 in das bodenseitige Fluidreservoir 39 weiterzuleiten. Von dem bodenseitigen Fluidreservoir 39 (Figur 3) kann das Fluid durch die mindestens eine Öffnung 36 in den unteren Bereich 32 zu dem Zwischenzahnrad 20 gelangen, um von dort wieder im Innenraum 30 verteilt zu werden. Durch die Verbindung mindestens eines seitlichen Fluidreservoirs 40 und des bodenseitigen Fluidreservoirs 39 sowie die bodenseitige Zufuhr des Fluides in den Innenraum 30 kann der Einfluss von Schwankungen des Fluidstands auf die Getriebeanordnung 10 reduziert werden. Ein Einfluss des Fluidfüllstandes auf die Planschverluste und auf eine Temperaturerhöhung kann hierdurch verringert werden. Das bodenseitige Fluidreservoir 40 weist ein hinreichend großes Volumen auf, so dass dorthin zurücklaufendes Fluid vor einem Austreten durch die Öffnung 36 beruhigt werden kann, wodurch Verunreinigungen in dem Fluid sich absetzen können und nicht wieder in den Fluidkreislauf in den Innenraum 30 der Getriebeanordnung 10 gelangen. In dem Getriebegehäuse 12 ist an einer Unterseite des bodenseitigen Fluidreservoirs 40 eine Ablauföffnung 48 angeordnet, die durch eine Ablassschraube 50 lösbar verschlossen ist, um das Fluid und/oder abgelagerte Verunreinigungen aus dem Getriebegehäuse 12 ablassen zu können.

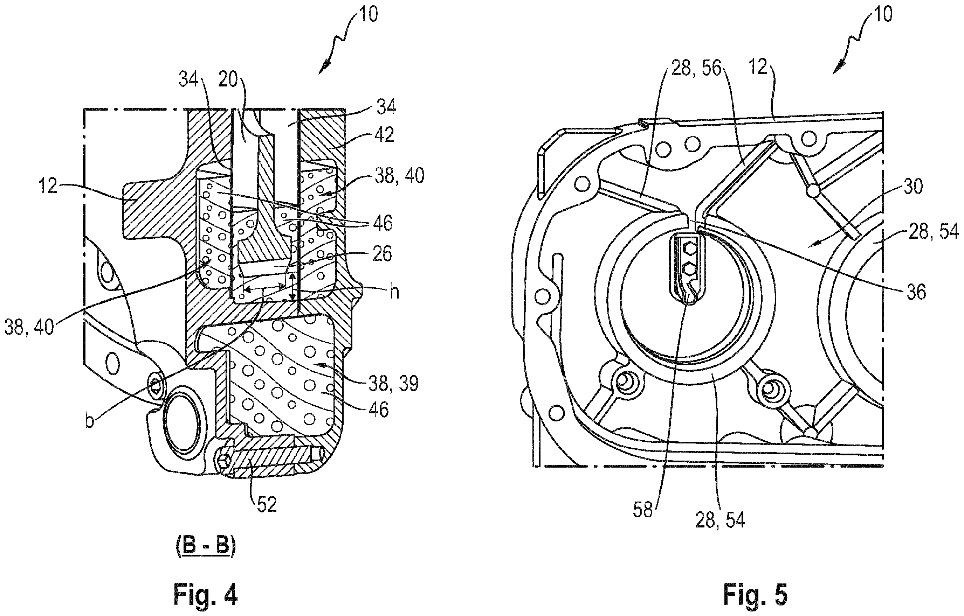

In Figur 4 ist eine Schnittansicht des Getriebegehäuses 12 entlang der Schnittlinie B-B dargestellt. Der dargestellte Schnitt verläuft dabei durch die beiderseits des Zwischenzahnrades 20 angeordneten seitlichen Fluidreservoire 39 und das unterhalb davon angeordnete bodenseitige Fluidreservoir 39. Der Füllstand des Fluides 46 in den seitlichen Fluidreservoiren 40, welches beispielsweise nach dem Verteilen im Innenraum 30 über die Innenwände in die seitlichen Fluidreservoire 40 zurücklaufen kann, ist dabei höher als an der Unterseite des Zwischenzahnrads 20 in dem unteren Bereich 32, wodurch die Planschverluste verringert werden können. Das Fluid 46 gelangt durch fluiddurchlässige Verbindungen (nicht dargestellt) in das bodenseitige Fluidreservoir 39, von wo es durch die Öffnung 36 (nicht gezeigt) in den unteren Bereich 32 an dem Zwischenzahnrad 32 weiterströmen kann, um von dort durch das Zwischenzahnrad 20 im Getriebegehäuse 12 verteilt zu werden. Das Getriebegehäuse 12 weist dabei einen mit Befestigungsmitteln 52 lösbar befestigten Gehäusedeckel 42 auf. Der Gehäusedeckel 42 weist innenseitig eine Innenstruktur 28 und Aussparungen 38 auf, welche teilweise seitliche Fluidreservoire 40 und das bodenseitige Fluidreservoir 39 ausbilden. Das Trennmittel 34 des bodenseitigen Fluidreservoirs 39 ist zumindest teilweise in dem Gehäusedeckel 42 ausgebildet.

In Figur 5 ist der Bereich des Getriebegehäuses 12 dargestellt, in dem das zweite Abtriebszahnrad (nicht dargestellt) angeordnet ist. Die Innenstruktur 28 des Getriebegehäuses 12 ist sowohl in Form von Rippen 56 als auch in Form eines ringförmigen Lagersitzes 54 ausgebildet. Der Lagersitz 54 dient der Aufnahme der Lager (nicht dargestellt) des insbesondere zweiten Abtriebszahnrades (nicht dargestellt). Die Rippen 56 insbesondere oberhalb des Lagersitzes 54, und/oder eines (nicht dargestellten) seitlichen Fluidreservoirs, sind trichterförmig angeordnet und münden in einer Öffnung 36. Die Öffnung 36 ist in dem Lagersitz 54 obenseitig angeordnet, und ermöglicht es einem Fluid, welches von der Innenwand über die trichterförmig angeordneten Rippen 56 dorthin geleitet wurde, in den Lagersitz 54 hineinzuströmen.

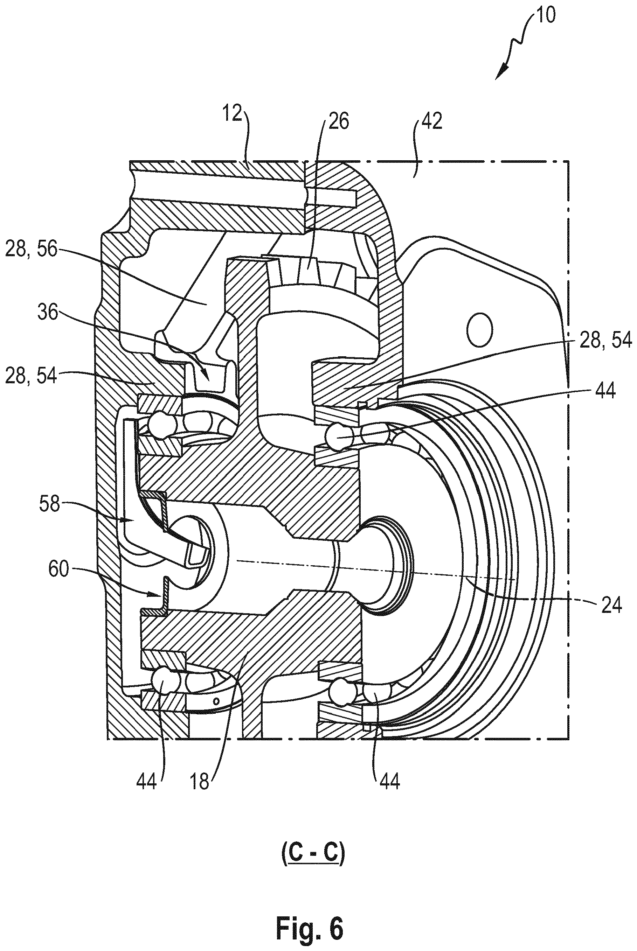

Die Abtriebszahnräder 16, 18, insbesondere das in Figur 6 entlang der Schnittlinie C-C dargestellte zweite Abtriebszahnrad 18, weisen einen konzentrisch um die Drehachse 24 angeordneten Hohlraum auf, durch welchen das Fluid, beispielsweise über entsprechend ausgestaltete Abtriebswellen (nicht dargestellt) zur Schmierung des Nebenabtriebs geleitet werden kann. Das Fluid wird dabei von einem innenseitig, innerhalb des Lagersitzes 54, an dem Getriebegehäuse 12 angeordneten Leitelement 58 in das Abtriebszahnrad 16, 18 hineingeleitet. Das Leitelement 58 ist dabei an einem Ende, insbesondere lösbar, mit dem Getriebegehäuse 12 verbunden und weist an dem anderen Ende ein von der Innenseite des Getriebegehäuse 12 abgewinkeltes Profil zum Leiten des Fluides auf.

Von der Innenwand des Getriebegehäuses 12 kann das Fluid durch eine (nicht dargestellte) Öffnung direkt durch die Innenstruktur 28 bzw. den Lagerring 54 zu dem Leitelement 58 gelangen. Über eine außenseitig an der Oberseite des Lagersitzes 54 angeordnete rinnenförmige Öffnung 36 kann das Fluid von der Innenwand des Getriebegehäuses 12 an das Zahnrad 16, 18 gelangen und von dort beispielsweise durch die Lagerung 44 zu dem Leitelement 58 fließen. Das Fluid wird dann zumindest teilweise von innerhalb des Lagersitzes 54 über das Leitelement 58 in das Abtriebszahnrad 16, 18 geleitet werden.

Damit das Fluid innerhalb des Abtriebszahnrades 16, 18 verbleibt, weist dies leitelementseitig in dem Hohlraum randseitig eine umlaufende Kappe 60 auf, welche wie ein Kragen nach radial innen ragt und das Fluid in dem Abtriebszahnrad 16, 18 zurückhält. Das zweite Abtriebszahnrad 18 ist über in den Lagersitzen 54 abgestützten Lagern 44 drehbar in dem Getriebegehäuse 12 gelagert. Ein Lagersitz 54 ist dabei in dem Gehäusedeckel 42 ausgebildet. Gehäusedeckelseitig ist kein Leitelement an den Abtriebszahnrädern 16, 18 angeordnet, da hier die Abtriebswellen (nicht dargestellt) durch das Getriebegehäuse 12 und den Gehäusedeckel 42 hindurchragen.

### Bezugszeichenliste

- 10: Getriebeanordnung
- 12: Getriebegehäuse
- 14: Antriebszahnrad
- 16: erstes Abtriebszahnrad
- 18: zweites Abtriebszahnrad
- 20: Zwischenzahnrad
- 22: Antriebswelle
- 24: Drehachse
- 26: Zähne
- 28: Innenstruktur
- 30: Innenraum
- 32: unterer Bereich
- 34: Trennmittel
- 36: Öffnung
- 38: Aussparung
- 39: bodenseitiges Fluidreservoir
- 40: seitliches Fluidreservoir
- 42: Gehäusedeckel
- 44: Lagerung
- 46: Fluid
- 48: Ablassöffnung
- 50: Ablasschraube
- 52: Befestigungsmittel
- 54: Lagersitz
- 56: Rippe
- 58: Leitelement
- 60: Kappe

- b: Zahnbreite
- h: Höhe

## Patentansprüche

1. Getriebeanordnung (10) für eine landwirtschaftliche Arbeitsmaschine, insbesondere Traktor, Mähdrescher oder Feldhäcksler, mit einem Antriebszahnrad (14) und mindestens einem ersten Abtriebszahnrad (16), welche jeweils um eine Drehachse (24) drehbar gelagert und zum drehfesten Verbinden mit einer Antriebswelle (22) oder Abtriebswelle als Nebenabtrieb der landwirtschaftlichen Arbeitsmaschine ausgestaltet sind, wobei die Getriebeanordnung (10) ein mit dem Antriebszahnrad (14) und dem mindestens einen Abtriebszahnrad (16) in kämmendem Eingriff stehendes Zwischenzahnrad (20) aufweist, wobei die Getriebeanordnung (10) ein Getriebegehäuse (12) aufweist, wobei die Zahnräder (14, 16, 20) in einem durch das Getriebegehäuse (12) gebildeten Innenraum (30) angeordnet sind, welches innenseitig eine Innenstruktur (28) zur Vergrößerung der Oberfläche des Getriebegehäuses (12) und zur Verbesserung der Wärmeabfuhr des Getriebegehäuses (12) aufweist und im Betrieb zumindest teilweise mit einem Fluid (46) gefüllt ist, **dadurch gekennzeichnet, dass** das Getriebegehäuse (12) innenseitig eine bodenseitig, also unterhalb, des Zwischenzahnrads (20) angeordnete Aussparung (38) aufweist, welche gegenüber dem Innenraum (30) zumindest in einem unteren Bereich (32) des Innenraums (30) durch ein Trennmittel (34) abgetrennt ist, wodurch ein bodenseitiges Fluidreservoir (39) zumindest unterhalb des Zwischenzahnrades (20) ausgebildet ist, wobei das Trennmittel (34) des bodenseitigen Fluidreservoirs (39) eine fluiddurchlässige Öffnung (36) aufweist, über die im Betrieb das Fluid (46) in den unteren Bereich (32) des Innenraums (30) gelangt, wobei der Kopfkreis des Zwischenzahnrades (20) bodenseitig tiefer angeordnet ist als die Kopfkreise der anderen Zahnräder (14, 16), derart, dass das Zwischenzahnrad (20) im Betrieb in das Fluid (46) im unteren Bereich (32) des Innenraums (30) eintaucht.

2. Getriebeanordnung (10) nach Anspruch 1, **dadurch gekennzeichnet, dass** die Getriebeanordnung (10) ein zweites Abtriebszahnrad (18) aufweist, wobei das Antriebszahnrad (14) dem Antrieb des ersten Abtriebszahnrades (16) und des zweiten Abtriebszahnrades (18) dient, welches um eine Drehachsen (24) drehbar in dem Getriebegehäuse (12) drehbar gelagert ist, wobei das erste Abtriebszahnrad (16) neben dem Zwischenrad (20) auch mit dem zweiten Abtriebszahnrad (18) in kämmendem Eingriff steht, wodurch eine Drehbewegung des ersten Abtriebszahnrades (16) ebenfalls auf das zweite Abtriebszahnrad (18) übertragen wird.

3. Getriebeanordnung (10) nach Anspruch 1 oder 2, **dadurch gekennzeichnet, dass** das Trennmittel (34) in Form eines Bleches und/oder einstückig mit dem Getriebegehäuse (12) ausgebildet ist.

4. Getriebeanordnung (10) nach einem der vorherigen Ansprüche, **dadurch gekennzeichnet, dass** das Getriebegehäuse (12) innenseitig mindestens ein seitlich neben einem Zahnrad (14, 16, 18, 20) angeordnetes seitliches Fluidreservoir (40) aufweist, wobei das bodenseitige Fluidreservoir (39) mit dem Fluidreservoir (40) fluiddurchlässig verbunden ist.

5. Getriebeanordnung (10) nach einem der vorherigen Ansprüche, **dadurch gekennzeichnet, dass** zwischen dem Zwischenzahnrad (20) und dem Trennmittel (34) des bodenseitigen Fluidreservoirs (39) ein Freigang mit einer Höhe (h) ausgebildet ist, wobei das Trennmittel (34) des bodenseitigen Fluidreservoirs (39) dem Umfang des Zwischenzahnrades (20) zumindest teilweise mit einer konstanten Höhe (h) folgt, wodurch der Freigang als Freigang mit zumindest teilweise konstantem Querschnitt ausgebildet ist.

6. Getriebeanordnung (10) nach einem der vorhergehenden Ansprüche, **dadurch gekennzeichnet, dass** die Innenstruktur (28) zumindest im Bereich der Drehachse (24) eines Zahnrades (14, 16, 18, 20) ringförmig ausgebildet ist, und die ringförmige Struktur (54), insbesondere an einer Oberseite, mindestens eine fluiddurchlässige Öffnung (36) zur Fluidzufuhr zu der Drehachse (24) hin aufweist.

7. Getriebeanordnung (10) nach Anspruch 6, **dadurch gekennzeichnet, dass** die Innenstruktur (28), insbesondere im Bereich oberhalb der mindestens einen fluiddurchlässigen Öffnung (36) der ringförmigen Struktur (54), trichterförmig ausgebildet ist.

8. Getriebeanordnung (10) nach einem der vorhergehenden Ansprüche, **dadurch gekennzeichnet, dass** die Innenstruktur (28) mindestens ein Leitelement (58) aufweist, welches das Fluid (46) im Wesentlichen von einer Innenseite des Getriebegehäuses (12) wegleitet.

9. Getriebeanordnung (10) nach einem der vorhergehenden Ansprüche, **dadurch gekennzeichnet, dass** mindestens ein Zahnrad (14, 16, 18, 20) innenseitig eine ringförmige Kappe (60) zum Zurückhalten des Fluids (46) aufweist.

10. Landwirtschaftliche Arbeitsmaschine mit mindestens einer Getriebeanordnung (10) nach einem der vorhergehenden Ansprüche.

11. Verwendung einer Getriebeanordnung (10) nach einem der Ansprüche 1 bis 9 als Pumpenverteilergetriebe.

## Claims

1. A gear assembly (10) for an agricultural working machine, in particular a tractor, combine harvester or forage harvester, with a driving toothed wheel (14) and at least one first driven toothed wheel (16), which are respectively rotatably mounted about an axis of rotation (24) and are configured for connection, in a manner which is fixed against rotation, to a drive shaft (22) or driven shaft as a power take-off for the agricultural working machine,
wherein the gear assembly (10) has an intermediate toothed wheel (20) which is in meshing engagement with the driving toothed wheel (14) and the at least one driven toothed wheel (16), wherein the gear assembly (10) has a gear housing (12), wherein the toothed wheels (14, 16, 20) are disposed in an interior space (30) formed by the gear housing (12) which has an interior structure (28) in the interior for increasing the surface area of the gear housing (12) and for improving the dissipation of heat from the gear housing (12) and which is at least partially filled with a fluid (46) during operation, **characterized in that** the interior of the gear housing (12) has a recess (38) on the bottom, i.e. underneath the intermediate toothed wheel (20), which is separated from the interior space (30) by a separating means (34) in at least a lower region (32) of the interior space (30), whereupon a bottom fluid reservoir (39) is formed at least underneath the intermediate toothed wheel (20), wherein the separating means (34) of the bottom fluid reservoir (39) has a fluid-permeable opening (36) via which, during operation, the fluid (46) gains access to the lower region (32) of the interior space (30), wherein the disposition of the bottom of the tip circle of the intermediate toothed wheel (20) is deeper than the tip circles of the other toothed wheels (14, 16) such that in operation, the intermediate toothed wheel (20) dips into the fluid (46) in the lower region (32) of the interior space (30).

2. The gear assembly (10) according to claim 1, **characterized in that** the gear assembly (10) has a second driven toothed wheel (18), wherein the driving toothed wheel (14) serves to drive the first driven toothed wheel (16) and the second driven toothed wheel (18) which is rotatably mounted in the gear housing (12) for rotation about an axis of rotation (24), wherein in addition to the toothed wheel (20), the first driven toothed wheel (16) is also in meshing engagement with the second driven toothed wheel (18), whereupon a rotational movement of the first driven toothed wheel (16) is also transmitted to the second driven toothed wheel (18).

3. The gear assembly (10) according to claim 1 or claim 2, **characterized in that** the separating means (34) is in the form of a sheet of metal and/or is formed in one piece with the gear housing (12).

4. The gear assembly (10) according to one of the preceding claims, **characterized in that** the interior of the gear housing (12) has at least one lateral fluid reservoir (40) disposed laterally next to a toothed wheel (14, 16, 18, 20), wherein the bottom fluid reservoir (39) is connected to the fluid reservoir (40) in a fluid-permeable manner.

5. The gear assembly (10) according to one of the preceding claims, **characterized in that** a clearance with a height (h) is formed between the intermediate toothed wheel (20) and the separating means (34) of the bottom fluid reservoir (39), wherein the separating means (34) of the bottom fluid reservoir (39) follows at least part of the circumference of the intermediate toothed wheel (20) at a constant height (h), whereupon the clearance is configured as a clearance with a cross section which is constant at least in parts.

6. The gear assembly (10) according to one of the preceding claims, **characterized in that** the interior structure (28) is annular in configuration at least in the region of the axis of rotation (24) of a toothed wheel (14, 16, 18, 20), and the annular structure (54), in particular at an upper side, has at least one fluid-permeable opening (36) for the supply of fluid to the axis of rotation (24).

7. The gear assembly (10) according to claim 6, **characterized in that** the interior structure (28) is configured in the shape of a funnel, in particular in the region above the at least one fluid-permeable opening (36) of the annular structure (54).

8. The gear assembly (10) according to one of the preceding claims, **characterized in that** the interior structure (28) has at least one guide element (58) which substantially guides the fluid away from an interior of the gear housing (12).

9. The gear assembly (10) according to one of the preceding claims, **characterized in that** the interior of the at least one toothed wheel (14, 16, 18, 20) has an annular cap (60) for holding back the fluid (46).

10. An agricultural working machine with at least one gear assembly (10) according to one of the preceding claims.

11. Use of a gear assembly (10) according to one of claims 1 to 9 as a pump transfer gear.

## Revendications

1. Agencement de boîte de vitesses (10) destiné à une machine agricole, notamment un tracteur, une moissonneuse-batteuse ou une ramasseuse-hacheuse-chargeuse, comprenant une roue dentée d'entraînement (14) et au moins une première roue dentée menée (16), qui sont chacune montées tournantes autour d'un axe de rotation (24) et sont agencées en vue d'une liaison solidaire en rotation avec un arbre d'entraînement (22) ou un arbre mené, en tant que sortie d'entraînement secondaire de la machine agricole,
l'agencement de boîte de vitesses (10) présentant une roue dentée intermédiaire (20) qui est en prise d'engrènement avec la roue dentée d'entraînement (14) et la roue dentée menée (16), au nombre d'au moins une, l'agencement de boîte de vitesses (10) présentant un carter de boîte de vitesses (12) les roues dentées (14, 16, 20) étant disposées dans un espace intérieur (30) formé par le carter de boîte de vitesses (12) qui présente côté intérieur une structure interne (28), destinée à augmenter la surface du carter de boîte de vitesses (12) et à améliorer l'évacuation de la chaleur du carter de boîte de vitesses (12), et qui est rempli au moins en partie avec un fluide (46) lors du fonctionnement, **caractérisé en ce que** le carter de boîte de vitesses (12) présente à l'intérieur, côté fond, et donc en dessous de la roue dentée intermédiaire (20), un évidement (38) qui est séparé vis-à-vis de l'espace intérieur (30) par un moyen de séparation (34), au moins dans une partie inférieure (32) de l'espace intérieur (30), ce qui a pour effet de créer un réservoir à fluide (39) côté fond, au moins sous la roue dentée intermédiaire (20), le moyen de séparation (34) du réservoir à fluide (39), côté fond, présentant une ouverture (36) laissant passer le fluide, par laquelle le fluide (46) passe dans la partie inférieure (32) de l'espace intérieur (30) lors du fonctionnement, le cercle de tête de la roue dentée intermédiaire (20) étant placé plus bas, côté fond, que le cercle de tête des autres roues dentées (14, 16), de sorte que lors du fonctionnement, la roue dentée intermédiaire (20) est immergée dans le fluide (46) dans la partie inférieure (32) de l'espace intérieur (30).

2. Agencement de boîte de vitesses (10) selon la revendication 1, **caractérisé en ce que** l'agencement de boîte de vitesses (10) présente une deuxième roue dentée menée (18), la roue dentée d'entraînement (14) servant à entraîner la première roue dentée menée (16) et la deuxième roue dentée menée (18) qui est montée tournante autour d'un axe de rotation (24) dans le carter de boîte de vitesses (12), la première roue dentée menée (16) étant en prise d'engrènement, outre avec la roue dentée intermédiaire (20), également avec la deuxième roue dentée menée (18), ce qui a pour effet qu'un mouvement de rotation de la première roue dentée menée (16) est également transmis à la deuxième roue dentée menée (18).

3. Agencement de boîte de vitesses (10) selon la revendication 1 ou 2, **caractérisé en ce que** le moyen de séparation (34) est réalisé sous la forme d'une tôle et/ou d'une seule pièce avec le carter de boîte de vitesses (12).

4. Agencement de boîte de vitesses (10) selon une des revendications précédentes, **caractérisé en ce que** le carter de boîte de vitesses (12) présente à l'intérieur au moins un réservoir à fluide (40) disposé latéralement à côté d'une roue dentée (14, 16, 18, 20), le réservoir à fluide (39) situé côté fond étant relié au réservoir à fluide (40) de manière à laisser passer le fluide.

5. Agencement de boîte de vitesses (10) selon une des revendications précédentes, **caractérisé en ce qu'**il est prévu entre la roue dentée intermédiaire (20) et le moyen de séparation (34) du réservoir à fluide (39) côté fond, un passage libre d'une hauteur (h), le moyen de séparation (34) du réservoir à fluide (39) côté fond suivant au moins en partie le pourtour de la roue dentée intermédiaire (20) avec une hauteur (h) constante, ce qui a pour effet que le passage libre est réalisé comme passage libre ayant au moins en partie une section constante.

6. Agencement de boîte de vitesses (10) selon une des revendications précédentes, **caractérisé en ce que** la structure interne (28) est réalisée sous une forme annulaire au moins dans la région de l'axe de rotation (24) d'une roue dentée (14, 16, 18, 20), et la structure annulaire (54) présente, notamment sur une face supérieure, au moins une ouverture (36) laissant passer un fluide, pour l'amenée de fluide à l'axe de rotation (24).

7. Agencement de boîte de vitesses (10) selon la revendication 6, **caractérisé en ce que** la structure interne (28) est réalisée sous forme d'entonnoir, notamment dans la région au-dessus de l'ouverture (36) laissant passer un fluide, au nombre d'au moins une, de la structure annulaire (54).

8. Agencement de boîte de vitesses (10) selon une des revendications précédentes, **caractérisé en ce que** la structure interne (28) présente au moins un élément de guidage (58) qui dirige le fluide (46) pour l'éloigner sensiblement d'une face intérieure du carter de boîte de vitesses (12).

9. Agencement de boîte de vitesses (10) selon une des revendications précédentes, **caractérisé en ce qu'**au moins une roue dentée (14, 16, 18, 20) présente, côté intérieur, un capuchon (60) annulaire destiné à retenir le fluide (46).

10. Machine agricole dotée d'au moins un agencement de boîte de vitesses (10) selon une des revendications précédentes.

11. Utilisation d'un agencement de boîte de vitesses (10) selon une des revendications 1 à 9, en tant que boîte de transfert de pompe.
